# EUROPÄISCHE PATENTANMELDUNG

(11) **EP 4 167 575 A1**
(43) Veröffentlichungstag der Anmeldung: **19.04.2023**
(21) Anmeldenummer: 22201726.1
(22) Anmeldetag: 14.10.2022
(51) Int. Cl.: H04N 21/214, H04L 12/40, H04N 7/10, H04N 7/15, H04N 21/436

(54) **GERICHTSSAAL-MEDIENSYSTEM**

(30) Priorität: 14.10.2021 DE 102021126608
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Gerichtssaal-Mediensystem zum Empfang und zur Ausgabe von Bild- und/oder Toninhalten mit einer Matrix-Schaltung mit einer Mehrzahl von Anschlüssen für Quellen, einer separaten Steuereinheit, einem Control-Panel zur Bedienung der separaten Steuereinheit, einer Mehrzahl von Ausgabeeinrichtungen, sowie ein Verfahren zur Darstellung von Inhalten auf einer Ausgabeeinrichtung eines Gerichtssaales mit den Verfahrensschritten Empfangen eines Bild- und/oder Toninhaltes über einen ersten von mehreren Anschlüssen einer Matrixschaltung sowie Ausgeben des Bild- und/oder Toninhaltes auf einer ersten Ausgabeeinrichtung.

## Beschreibung

Die Erfindung betrifft ein Gerichtssaal-Mediensystem zum Empfang und zur Ausgabe von Bild- und/oder Toninhalten mit einer Matrix-Schaltung mit einer Mehrzahl von Anschlüssen für Quellen, einer separaten Steuereinheit, einem Control-Panel zur Bedienung der separaten Steuereinheit, einer Mehrzahl von Ausgabeeinrichtungen, sowie ein Verfahren zur Darstellung von Inhalten auf einer Ausgabeeinrichtung eines Gerichtssaales mit den Verfahrensschritten Empfangen eines Bild- und/oder Toninhaltes über einen ersten von mehreren Anschlüssen einer Matrixschaltung und Ausgeben des Bild- und/oder Toninhaltes auf einer ersten Ausgabeeinrichtung.

### Stand der Technik

Der Einsatz eines Mediasystems in der Justiz, insbesondere in einem Gerichtssaal, bietet Vorteile in Hinblick auf Vereinfachung der Kommunikation zwischen den Justizbehörden. So kann z.B. die Meinung von Sachverständigen eingeholt werden, die entfernt vom Sitzungsort wohnen. Auch spezialisierte Dolmetscher können einbezogen werden, vor allem bei Verfahren an Gerichten in ländlichen Räumen. Neben der Möglichkeit, Videokonferenzen mit dieser Lösung durchzuführen, ist es ebenso möglich, auch im Zuge der Einführung der elektronischen Aktenführung unsere Lösung einzubinden. Somit können zwei Digitalisierungsschwerpunkte im Bereich der Justiz mit einer Lösung umgesetzt werden.

Die Schrift CN 10 184 72 20 A offenbart eine digitale Gerichtsverhandlungssteuerungsvorrichtung, die die folgenden Module umfasst: eine zentrale Verarbeitungseinheit, ein Matrixschaltmodul, ein Netzwerkschnittstellenmodul, einen Video-/Audiocodierer, einen Video-/Audiodecodierer, ein Videoausgabesteuermodul, ein Audioausgabesteuermodul und eine Ausgabesteuerschnittstelle. Die zentrale Verarbeitungseinheit beendet die Gerichtsverhandlung wie die Vor-Ort-Anzeige, das Abspielen, die Beweisanzeige und ähnliches, indem sie das Matrixschaltmodul, das Netzwerkschnittstellenmodul, das Videoausgangssteuermodul, das Audioausgangssteuermodul und die Ausgangssteuerschnittstelle steuert.

Die Patentschrift CN 10 184 0532 A offenbart ein digitales Gerichtsprozess-Informationsverarbeitungssystem, das die folgenden Vorrichtungen umfasst: eine digitale Gerichtsprozess-Steuerungsvorrichtung, einen Informationsmanagement-Server, eine Speichervorrichtung, eine Video-Audio-Matrix, eine Kamera, ein Mikrofon, einen Audioplayer, eine Videoanzeigevorrichtung und eine zentrale Steuereinheit, wobei die digitale Gerichtsprozess-Steuerungsvorrichtung eine Steueranweisung des Informationsmanagement-Servers empfängt, um die Speichervorrichtung, die Video-Audio-Matrix, den Audioplayer, die Videoanzeigevorrichtung und die zentrale Steuereinheit zu steuern, alle gerichtlichen Prozesse eines Gerichts zu vervollständigen und alle Materialien eines Falls zu verarbeiten, zu bearbeiten, zu archivieren und zu speichern.

Es ist daher eine Aufgabe der Erfindung, ein Verfahren zur Bedienung eines Mediasystems für einen Gerichtssaal bereitzustellen, mit dem das Mediasystem komfortabel, flexibel sowie vertrauenswürdig bedienbar ist. Es ist ebenfalls Aufgabe der Erfindung, ein Mediasystem für einen Gerichtssaal bereitzustellen, das komfortabel bedienbar, flexibel sowie vertrauenswürdig ist.

Die Aufgabe wird mittels des Verfahrens zur Darstellung von Inhalten auf einer Ausgabeeinrichtung eines Gerichtssaales gelöst. Vorteilhafte Ausführungen der Erfindung sind in den Unteransprüchen dargelegt.

Das erfindungsgemäße Verfahren zur Darstellung von Inhalten auf einer Ausgabeeinrichtung eines Gerichtssaales weist drei Verfahrensschritte auf: Im ersten Verfahrensschritt wird ein Bild- und/oder Toninhalt über einen ersten von mehreren Anschlüssen einer Matrix-Schaltung empfangen. Im zweiten Verfahrensschritt wird der Bild- und/oder Toninhalt auf einer ersten Ausgabeeinrichtung ausgegeben. Im dritten Verfahrensschritt werden Teile der auf der ersten Ausgabeeinrichtung ausgegebenen Bild- und/oder Toninhalte auf einer zweiten Ausgabeeinrichtung ausgegeben. Die zweite Ausgabeeinrichtung ist dabei unterschiedlich von der ersten Ausgabeeinrichtung.

Im Rahmen dieser Erfindung wird unter einer Ausgabeeinrichtung eine Einrichtung verstanden, die zur Ausgabe von Bildinhalten und/oder Toninhalten geeignet ist. Die Ausgabeeinrichtung verfügt dazu über geeignete Komponenten oder ist mit geeigneten Komponenten verbunden. Diese Komponenten sind z.B. ein oder mehrere Bildschirme - auch mit Touch-Funktion - und ein oder mehrere Lautsprecher. Insbesondere können auf jeweils der ersten und der zweiten Ausgabeeinrichtung unterschiedliche Bild- und/oder Toninhalte einer Quelle ausgegeben werden. Außerdem besteht die Möglichkeit, die Bild- und/oder Toninhalte, die auf der ersten Ausgabeeinrichtung ausgegeben werden, zu prüfen, um sie danach auf der zweite Ausgabeeinrichtung auszugeben. Dabei besteht die Möglichkeit, Teile der Inhalte auszuwählen und einem zweiten Teilnehmerkreis zugänglich zu machen.

In einer Weiterbildung der Erfindung wird der erste Anschluss als Quelle für den Bild- und/oder Toninhalt ausgewählt und/oder die erste Ausgabeeinrichtung als Ausgabeeinrichtung für die Ausgabe des Bild- und/oder Toninhaltes ausgewählt und/oder die zweite Ausgabeeinrichtung als Ausgabeeinrichtung für die Ausgabe des Bild- und/oder Toninhaltes ausgewählt.

Eine Quelle für den Bild- und/oder Toninhalt sind im Rahmen dieser Schrift ein oder mehrere Geräte, die dazu eingerichtet sind, Bild- und/oder Toninhalte aufzunehmen oder mit Geräten verbunden zu werden, die dazu eingerichtet sind, Bild- und/oder Toninhalte aufzunehmen. Beispiele für Quellen sind Kameras und/oder Mikrophone, die optional noch über Präsentationsumschalter/Video Scaler und/oder Medienplayer und/oder Audio-Mischpult verbunden sind. Die Quellen können auch mobile Datengeräte wie Laptops, Notebooks oder Notepads sein, auf denen Bild- und/oder Toninhalte gespeichert sind. Diese Geräte weisen üblicherweise auch integrierte Kameras und Mikrophone auf, die Bild- und/oder Toninhalte aufnehmen können.

Die Bild- und/oder Toninhalte der ausgewählten Quelle werden wahlweise auf der ersten Ausgabeeinrichtung und/oder auf der zweiten Ausgabeeinrichtung ausgegeben. Dabei können die Bild- und/oder Toninhalte, die jeweils auf der ersten Ausgabeeinrichtung und der zweiten Ausgabeeinrichtung ausgegeben werden, gleich oder unterschiedlich zueinander sein. So kann z.B. ein Bildinhalt auf der ersten Ausgabeeinrichtung ausgegeben werden, auf der zweiten Ausgabeeinrichtung ein Toninhalt. Es besteht auch die Möglichkeit, einen Bild- und/oder Toninhalt lediglich auf der ersten oder der zweiten Ausgabeeinrichtung auszugeben, die jeweils andere Ausgabeeinrichtung ist ausgeschaltet.

In einer weiteren Gestaltung der Erfindung erfolgt das Empfangen des Bild- und/oder Toninhalts über den ersten von mehreren Anschlüssen einer Matrix-Schaltung und/oder das Ausgeben des Bild- und/oder Toninhaltes auf einer ersten Ausgabeeinrichtung über die an eine Matrix-Schaltung angeschlossene erste Ausgabeeinrichtung und/oder das Ausgeben von Teilen der auf der ersten Ausgabeeinrichtung ausgegebenen Bild- und/oder Toninhalten auf einer zweiten von der ersten Ausgabeeinrichtung verschiedenen Ausgabeeinrichtung über die an eine Matrix-Schaltung angeschlossene zweite Ausgabeeinrichtung. Mittels der Matrix-Schaltung werden die von den Quellen gelieferten Bild- und/oder Toninhalte derart geschaltet, dass die Bild- und Toninhalte auf allen, einer Mehrzahl oder auch nur auf einer einzelnen Ausgabeeinrichtung ausgegeben werden. Alle Quellen und ebenso alle Ausgabeeinrichtungen sind dabei mit der Matrix-Schaltung verbunden. Die Anbindung der zu steuernden Geräte kann über Ethernet, RS-232, Infrarot, Relais oder generelle I/O Ports erfolgen.

In einer Weiterbildung der Erfindung wird die Matrix-Schaltung über eine separate Steuereinheit geschaltet. Auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der separaten Steuereinheit sind außerdem die Steuerbefehle der an die Matrix-Schaltung angeschlossenen Ausgabeeinrichtungen und Quellen gespeichert.

In einer weiteren Ausführung der Erfindung wird über die separate Steuereinheit der Anschluss ausgewählt, über den der Bild- und/oder Toninhalt empfangen wird und/oder über die die separate Steuereinheit die erste Ausgabeeinrichtung auswählt, über den der Bild- und/oder Toninhalt an die erste Ausgabeeinrichtung ausgegeben wird und/oder über die separate Steuereinheit die zweite Ausgabeeinrichtung auswählt, über die der Bild- und/oder Toninhalt an die zweite Ausgabeeinrichtung ausgegeben wird. Auf der separaten Steuereinheit sind die Steuerbefehle der an die Matrix-Schaltung angeschlossenen Ausgabeeinrichtungen und Quellen gespeichert. Ein Bediener kann einen oder mehrere Anschlüsse als Quellen eines Bild- und/oder Toninhaltes auswählen und ein oder mehrere Anschlüsse auswählen, über die der empfangene Bild- und/oder Toninhalt ausgegeben wird. Dabei werden die Bild- und/oder Toninhalte der ausgewählten Quelle wahlweise auf der ersten Ausgabeeinrichtung und/oder auf der zweiten Ausgabeeinrichtung ausgegeben.

In einer weiteren Ausgestaltung der Erfindung erfolgt die Auswahl des Anschlusses für den Empfang des Bild- und/oder Toninhaltes und/oder die Auswahl der ersten Ausgabeeinrichtung und/oder die Auswahl der zweiten Ausgabeeinrichtung über das Control-Panel. Zur Eingabe von Befehlen an die separate Steuereinheit zur Steuerung der Matrix-Schaltung ist die separate Steuereinheit mit einem Control-Panel verbunden. Ein Bediener kann mittels des Control-Panels einen oder mehrere Anschlüsse als Quellen eines Bild- und/oder Toninhaltes auswählen und ein oder mehrere Anschlüsse als Ausgabeeinrichtungen auswählen, über die der empfangene Bild- und/oder Toninhalt ausgegeben wird. Hierfür weist das Control-Panel eine Eingabevorrichtung auf. Die Eingabevorrichtung kann eine Tastatur, eine Maus oder Ähnliches sein. In einer optionalen Ausführungsform ist das Control-Panel mit einen Touch-Display ausgestattet. In einer weiteren optionalen Ausgestaltung der Erfindung ist das Control-Panel ausschließlich aus dem Gerichtssaal heraus steuerbar.

In einer weiteren Ausbildung der Erfindung wird die Auswahl des Anschlusses für den Empfang des Bild- und/oder Toninhaltes und/oder die Auswahl der ersten Ausgabeeinrichtung und/oder die Auswahl der zweiten Ausgabeeinrichtung vom Control-Panel an die separate Steuereinheit gesendet. Control-Panel und separate Steuereinheit sind dazu über geeignete Schnittstellen miteinander verbunden. Auf der separaten Steuereinheit sind die Steuerbefehle zur Bedienung des Control-Panels gespeichert.

In einer Weiterbildung der Erfindung ist das Control-Panel eine von der ersten Ausgabeeinrichtung und/oder von der separaten Steuereinheit separate Einheit. Das Control-Panel kann daher auch entfernt, z.B. räumlich getrennt von der ersten Ausgabeeinrichtung und/oder von der separaten Steuereinheit angeordnet werden.

In einer weiteren Ausführung der Erfindung weist das Control-Panel eine eigene Anzeige auf. Mittels der Anzeige kann ein Bediener z.B. die auswählbaren und angewählten Anschlüsse für Quellen, erste und zweite Ausgabeeinrichtung einsehen. Optional weist die Anzeige eine Funktion zur Eingabe von Steuerbefehlen auf, z.B. eine Touch-Funktion. Das Control-Panel kann auch ein mobiles Endgerät, z.B. ein Notepad, Notebook oder Smartphone mit einer geeigneten Software sein.

In einer weiteren Ausgestaltung der Erfindung wird der über den ersten Anschluss empfangene Bild- und/oder Toninhalt und/oder der auf der ersten und/oder zweiten Ausgabeeinrichtung angezeigten Bild- und/oder Toninhalt nicht auf der Anzeige des Control-Panels dargestellt. Das Control-Panel dient lediglich zur Bedienung der separaten Steuereinheit, d.h. zur Auswahl der Quellen bzw. Ausgabeeinrichtungen.

In einer weiteren Ausbildung der Erfindung wird die Auswahl des Anschlusses für den Empfang des Bild- und/oder Toninhaltes und/oder die Auswahl der ersten Ausgabeeinrichtung und/oder die Auswahl der zweiten Ausgabeeinrichtung vom Control-Panel an die separate Steuereinheit gesendet. Control-Panel und separate Steuereinheit sind dazu über geeignete Schnittstellen miteinander verbunden. Auf der separaten Steuereinheit sind die Steuerbefehle zur Bedienung des Control-Panels gespeichert.

In einer vorteilhaften Ausführung der Erfindung werden die Bild- und/oder Toninhalte durch Zuschneiden der Bild- und/oder Toninhalte verändert. Die Bild- und/oder Toninhalte können derart verändert und bearbeitet werden, z.B. durch Ausschneiden, Zuschneiden oder Änderung der Lautstärke, dass nur wesentliche Inhalte ausgegeben werden.

In einer Weiterbildung der Erfindung erfolgt das Zuschneiden durch Ausschneiden eines Bildausschnitts und/oder einer Bild- und/oder Tonsequenz der auf der ersten Ausgabeeinrichtung ausgegebenen Bild- und/oder Toninhalte. Die erste Ausgabeeinrichtung ist dafür vorgesehen und geeignet, eine Bild- und/oder Tonsequenz zu verändern. Dazu verfügt die erste Ausgabeeinrichtung über Eingabemöglichkeiten, z.B. eine Touch-Funktion.

In einer weiteren Ausführung der Erfindung ist die erste Ausgabeeinrichtung eine von der Öffentlichkeit nicht einsehbare Ausgabeeinrichtung. Die erste Ausgabeeinrichtung ist vorzugsweise dem Vorsitzenden Richter und/oder seinem Beauftragten vorbehalten.

In einer weiteren Gestaltung der Erfindung ist die zweite Ausgabeeinrichtung eine von der Öffentlichkeit einsehbare Ausgabeeinrichtung. Bei Verhandlungen mit großem öffentlichem Interesse besteht die Möglichkeit, Bild- und/oder Toninhalte auf der zweiten Ausgabeeinrichtung abzuspielen. Diese zweite Ausgabeeinrichtung kann z.B. in einem separaten Raum angeordnet sein.

In einer weiteren Ausbildung der Erfindung wird aus einer Auswahl aus mehreren Ausgabeeinrichtungen jeder einzelnen der Ausgabeeinrichtungen ein Anschluss einer Quelle zugewiesen, wobei der über den ausgewählten Anschluss empfangene Bild- und/oder Toninhalt auf der dem ausgewählten Anschluss zugewiesenen Ausgabeeinrichtung ausgegeben wird. Jeder Ausgabeeinrichtung wird eine Quelle zum Empfang der Bild- und/oder Toninhalte zugewiesen. Ein Bediener kann mittels des Control-Panels einen oder mehrere Anschlüsse als Quellen eines Bild- und/oder Toninhaltes auswählen und ein oder mehrere Anschlüsse als Ausgabeeinrichtungen auswählen, über die der empfangene Bild- und/oder Toninhalt ausgegeben wird.

In einer Weiterbildung der Erfindung werden den einzelnen Ausgabeeinrichtungen unterschiedliche Anschlüsse zugewiesen. Vorzugsweise wird jeder Ausgabeeinrichtung genau ein Anschluss über eine Schnittstelle der Matrix-Schaltung zugewiesen. Damit ist jede Ausgabeeinrichtung genau identifiziert und von den weiteren an der Matrix-Schaltung angeschlossenen Ausgabeeinrichtungen abgegrenzt. Zusätzlich kann eine genau definierte Ausgabeeinrichtung zur Ausgabe von Bild- und/oder Toninhalten angewählt werden.

Die Aufgabe wird weiterhin mittels des Gerichtssaal-Mediensystems zum Empfang und zur Ausgabe von Bild- und/oder Toninhalten gelöst. Vorteilhafte Ausführungen der Erfindung sind ebenfalls in den Unteransprüchen dargelegt.

Das erfindungsgemäße Gerichtssaal-Mediensystem zum Empfang und zur Ausgabe von Bild- und/oder Toninhalten weist eine Matrix-Schaltung auf. Die Matrix-Schaltung weist eine Mehrzahl von Quell-Schnittstellen für den separaten Anschluss von Quellen auf, an denen eine Mehrzahl von Quellen angeschlossen sind und über die Bild- und/oder Toninhalte empfangbar sind. Die Matrix-Schaltung weist außerdem eine Mehrzahl von Ausgabe-Schnittstellen für den separaten Anschluss von Ausgabeeinrichtungen auf. Über die Ausgabe-Schnittstellen sind die Bild- und/oder Toninhalte ausgebbar. Mittels der Matrix-Schaltung werden die von den Quellen gelieferten Bild- und/oder Toninhalte derart geschaltet, dass die Bild- und Toninhalte auf allen, einer Mehrzahl oder auch nur auf einer einzelnen Ausgabeeinrichtung ausgegeben werden. Alle Quellen und ebenso alle Ausgabeeinrichtungen sind dabei mit der Matrix-Schaltung verbunden. Die Anbindung der zu steuernden Geräte kann über Ethernet, RS-232, Infrarot, Relais oder generelle I/O Ports erfolgen. Das erfindungsgemäße Gerichtssaal-Mediensystem weist außerdem eine separate Steuereinheit auf, die über die Steuerungsausgangsschnittstelle und die Steuerungseingangsschnittstelle an die Matrix-Schaltung angeschlossen ist. Auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der separaten Steuereinheit sind außerdem die Steuerbefehle der an die Matrix-Schaltung angeschlossenen Ausgabeeinrichtungen und Quellen gespeichert. Das erfindungsgemäße Gerichtssaal-Mediensystem weist ebenfalls ein Control-Panel auf, das über die Control-Schnittstelle an die separate Steuereinheit angeschlossen ist. Das Control-Panel ist die zentrale Kontroll- bzw. Steuerungskomponente für die Steuerung des erfindungsgemäßen Gerichtssaal-Mediensystems. Es wird von dem Vorsitzenden oder einer dafür bestimmten Person bedient. Das Control-Panel ist im Gerichtssaal selbst angeordnet und wird in einer optionalen Ausführungsform am Platz des Vorsitzenden angebracht, kann aber an den Arbeitsplatz einer beauftragten Person weitergeleitet werden. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Zur Ausgabe der Bild- und/oder Toninhalte weist das erfindungsgemäße Gerichtssaal-Mediensystem eine Mehrzahl von Ausgabe-Einrichtungen auf, die jeweils separat an die Matrix-Schaltung angeschlossen sind. Die Ausgabe-Einrichtungen sind vorzugsweise berührungssensitive Bildschirme, die zur Präsentation medialer Bild- und Toninhalte vorgesehen sind. Die Größe und Anzahl dieser Bildschirme ist abhängig von der Größe des Sitzungssaales. Der oder die Bildschirme sind an einer leicht zugänglichen, für alle Sitzungsteilnehmer einsehbaren Stelle im Sitzungssaal angebracht.

In einer Weiterbildung der Erfindung sind für den separaten Anschluss von Quellen eine Mehrzahl von Quell-Schnittstellen vorhanden, über die Bild- und/oder Toninhalte empfangbar sind. Vorzugsweise ist jede Quelle mittels jeweils genau eines Anschlusses mit der Matrix-Schaltung verbunden, wobei ein Anschluss eine oder eine Mehrzahl von Schnittstellen aufweisen kann. Damit ist jede Quelle genau identifiziert und von den weiteren an der Matrix-Schaltung angeschlossenen Quellen abgegrenzt. Zusätzlich kann eine genau definierte Quelle zur Ausgabe von Bild- und/oder Toninhalten angewählt werden.

In einer weiteren Ausführung der Erfindung weist die Matrixschaltung eine Mehrzahl von Ausgabe-Schnittstellen für den separaten Anschluss von Ausgabeeinrichtungen auf, wobei über die Ausgabe-Schnittstellen die Bild- und/oder Toninhalte ausgebbar sind. Vorzugsweise ist jede Quelle mittels jeweils genau eines Anschlusses mit der Matrix-Schaltung verbunden, wobei ein Anschluss eine oder eine Mehrzahl von Schnittstellen aufweisen kann. Damit ist jede Quelle genau identifiziert und von den weiteren an der Matrix-Schaltung angeschlossenen Quellen abgegrenzt. Zusätzlich kann eine genau definierte Quelle zur Ausgabe von Bild- und/oder Toninhalten angewählt werden.

In einer weiteren Ausgestaltung der Erfindung weist die Matrixschaltung eine Steuerungseingangsschnittstelle für den Anschluss einer Steuereinheit auf, an die die separate Steuereinheit angeschlossen ist.. Auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der separaten Steuereinheit sind außerdem die Steuerbefehle der an die Matrix-Schaltung angeschlossenen Ausgabeeinrichtungen und Quellen gespeichert.

In einer weiteren Gestaltung der Erfindung weist die separate Steuereinheit eine Steuerungseingangsschnittstelle und/oder eine Control-Schnittstelle auf. Über die Steuerungseingangsschnittstelle und/oder eine Control-Schnittstelle ist das Control-Panel an der separaten Steuereinheit gespeichert und auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen.

Auf der separaten Steuereinheit sind außerdem die Steuerbefehle der an die Matrix-Schaltung angeschlossenen Ausgabeeinrichtungen und Quellen gespeichert.

In einer weiteren Ausbildung der Erfindung ist die separate Steuereinheit über die Steuerungsausgangsschnittstelle und die Steuerungseingangsschnittstelle an die Matrix-Schaltung angeschlossen. Der Anschluss kann ebenfalls über Ethernet, RS-232, Infrarot, Relais oder generelle I/O Ports erfolgen.

In einer Weiterbildung der Erfindung ist das Control-Panel über die Control-Schnittstelle an die separate Steuereinheit angeschlossen. Das Control-Panel ist daher direkt an der separaten Steuereinheit angeschlossen, nicht an der Matrix-Schaltung. Das Control-Panel dient lediglich zur Steuerung der separaten Steuereinheit, mittels der die Matrix-Schaltung zum Anwählen der Quellen und Ausgabeeinrichtungen gesteuert wird.

In einer weiteren Ausführung der Erfindung sind die Mehrzahl von Ausgabeeinrichtungen jeweils separat über die Ausgabe-Schnittstellen an die Matrix-Steuerung angeschlossen. Vorzugsweise ist jede Quelle mittels jeweils genau eines Anschlusses mit der Matrix-Schaltung verbunden, wobei ein Anschluss eine oder eine Mehrzahl von Schnittstellen aufweisen kann. Damit ist jede Quelle genau identifiziert und von den weiteren an der Matrix-Schaltung angeschlossenen Quellen abgegrenzt. Zusätzlich kann eine genau definierte Quelle zur Ausgabe von Bild- und/oder Toninhalten angewählt werden.

In einer Weiterbildung der Erfindung ist eine Ausgabeeinrichtung eine Master-Ausgabeeinrichtung.

Die Master-Ausgabeeinrichtung ist üblicherweise im Sichtfeld nur einer Person angeordnet und gibt Bild- und/oder Toninhalte vorzugsweise nur dieser Person aus. Diese Person ist vorzugsweise der Vorsitzende Richter. Der Vorsitzende Richter kann so die empfangenen Bild- und/oder Toninhalte, die auf der Master-Ausgabeeinrichtung angezeigt werden, prüfen und mittels Eingabe auf dem Control-Panel über die separate Steuerung auf weiteren Ausgabeeinrichtungen ausgeben. Zusätzlich kann der Vorsitzende Richter mittels der Master-Ausgabeeinrichtung die ausgewählten und auf der Master-Ausgabeeinrichtung angezeigten Bild- und/oder Toninhalte verändern und bearbeiten, z.B. ausschneiden, zuschneiden oder die Lautstärke ändern.

In einer weiteren Ausgestaltung der Erfindung umfassen die Quellen ein Laptop, eine Kamera, eine Dokumenten-Kamera, ein Videokonferenzsystem und/oder einen freien Anschluss. Eine Quelle für den Bild- und/oder Toninhalt sind ein oder mehrere Geräte, die dazu eingerichtet sind, Bild- und/oder Toninhalte aufzunehmen oder mit Geräten verbunden, die dazu eingerichtet sind, Bild- und/oder Toninhalte aufzunehmen. Die Quellen sind optional noch über Präsentationsumschalter/Video Scaler und/oder Medienplayer und/oder Audio-Mischpult verbunden. Die Quellen können auch mobile Datengeräte wie Laptops, Notebooks oder Notepads sein, auf denen Bild- und/oder Toninhalte gespeichert sind. Diese Geräte weisen üblicherweise zusätzlich integrierte Kameras und Mikrophone auf, die Bild- und/oder Toninhalte aufnehmen können.

In einer weiteren vorteilhaften Ausführung der Erfindung ist eine der Quellen über die separate Steuereinheit durch das Control-Panel steuerbar. Über das Bedienelement des Control-Panels kann der Bediener des Control-Panels die von der steuerbaren Quelle empfangenen Bild- und/oder Toninhalte bearbeiten. Insbesondere können die angezeigten Bild- und/oder Toninhalte über die separate Steuereinheit z.B. ausgeschnitten und/oder zugeschnitten werden und/oder die Lautstärke geändert werden.

Ausführungsbeispiele des erfindungsgemäßen Gerichtssaal-Mediensystems zum Empfang und zur Ausgabe von Bild- und/oder Toninhalten und des erfindungsgemäßen Verfahrens zur Darstellung von Inhalten auf einer Ausgabeeinrichtung eines Gerichtssaales sind in den Zeichnungen schematisch vereinfacht dargestellt und werden in der nachfolgenden Beschreibung näher erläutert.

Es zeigen:
- Fig. 1:: Gerichtssaal-Mediensystem mit zwei Ausgabeeinrichtungen
- Fig. 2: Gerichtssaal-Mediensystem mit fünf Ausgabeeinrichtungen
- Fig. 3:: Gerichtssaal-Mediensystem mit Steuerung einer steuerbaren Quelle
- Fig. 4:: Gerichtssaal-Mediensystem mit einem Control-Panel
- Fig. 5:: Gerichtssaal-Mediensystem einsatzbereit in einem Gerichtssaal
- Fig. 6:: Gerichtssaal mit Anordnung der unterschiedlichen Bereiche

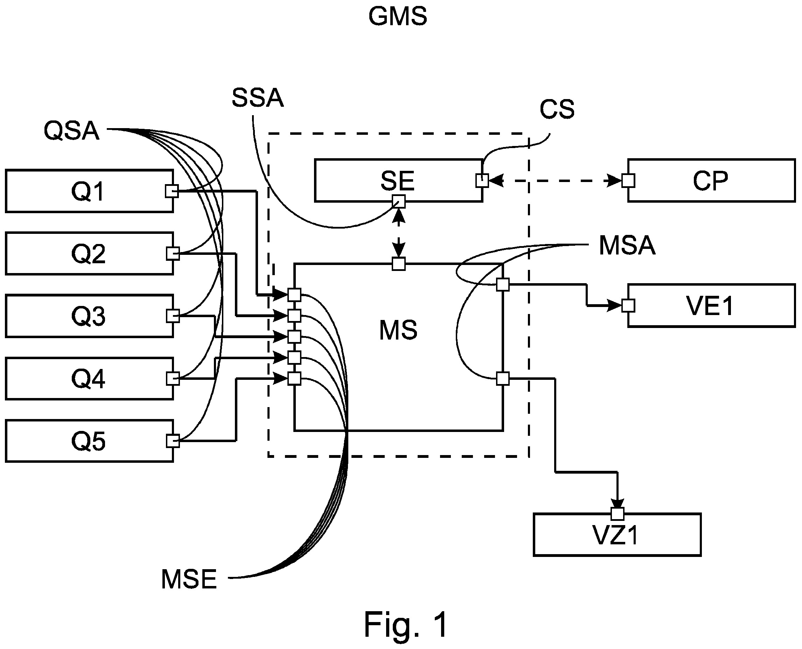

Fig. 1 zeigt eine Ansicht eines Ausführungsbeispiels des erfindungsgemäßen Gerichtssaal-Mediensystems GMS. Das erfindungsgemäße Gerichtssaal-Mediensystem GMS weist die Matrix-Schaltung MS auf. Die Matrix-Schaltung MS weist eine Mehrzahl von Anschlüssen in Form von Quell-Schnittstellen MSE auf, über die die Matrix-Schaltung MS mit den Quellen Q1, Q2, Q3, Q4, Q5 verbunden ist. Jede Quell-Schnittstelle MSE ist mit genau einer Quelle Q1, Q2, Q3, Q4, Q5 verbunden. Jede Quelle Q1, Q2, Q3, Q4, Q5 weist dazu jeweils eine Schnittstelle QSA auf.

Die Matrix-Schaltung MS weist außerdem zwei Ausgabe-Schnittstellen MSA auf, mit denen jeweils eine Ausgabeeinrichtung VE1, VZ1 verbunden ist. Die erste Ausgabeeinrichtung VE1 ist in diesem Ausführungsbeispiel eine Ausgabeeinrichtung, die für die Richter zur Verfügung steht. Die erste Ausgabeeinrichtung VE1 dient ebenfalls als eine Ausgabeeinrichtung für die Justizmitarbeiter, aber auch als Regiemonitor, auf dem die für die zweite Ausgabeeinrichtung VZ1 bestimmten Bild- und Toninhalte angezeigt werden können. Die zweite Ausgabeeinrichtung VZ1 ist z.B. eine Ausgabeeinrichtung die für die Öffentlichkeit bestimmte Bild- und Toninhalte anzeigt. Die zweite Ausgabeeinrichtung VZ1 kann sich in einem anderen Raum als die erste Ausgabeeinrichtung VE1 befinden. Alle Ausgabeeinrichtungen VE1, VZ1 weisen Komponenten zur Darstellung von Bildinhalten und/oder Toninhalten auf und/oder sind mit solchen verbunden. Jede Ausgabeeinrichtung VE1, VZ1 weist ebenfalls eine Schnittstelle QSA auf.

Über die Steuerungseingangsschnittstelle MSS ist die Matrix-Schaltung MS mit der separaten Steuereinheit SE verbunden. Die separate Steuereinheit SE weist dazu die Steuerungsausgangsschnittstelle SSA auf. Für den Anschluss eines Control-Panels CP weist die separate Steuereinheit SE die Control-Schnittstelle CS auf, die mit der Ausgabe-Schnittstelle CPS des Control-Panels CP verbunden ist. Das Control-Panel CP weist eine eigene Anzeige sowie ein Bedienelement auf. Auf der separaten Steuereinheit SE ist die Konfiguration für die Steuerungslogik gespeichert. Die Anbindung der zu steuernden Ausgabeeinrichtungen VE1, VZ1 und Quellen Q1, Q2, Q3, Q4, Q5 kann über Ethernet, RS-232, Infrarot, Relais oder generelle I/O Ports erfolgen. Die Steuerungslogik wird über eine Cloud bereitgestellt und kann in einen Speicher der separaten Steuereinheit SE geladen werden.

Zur Darstellung von Bild- und/oder Toninhalten auf einer der beiden Ausgabeeinrichtungen VE1, VZ1 wird im ersten Verfahrensschritt ein Bild- und/oder Toninhalt von der Matrix-Schaltung MS empfangen. Die Bild- und Toninhalte werden von den Quellen Q1, Q2, Q3, Q4, Q5 geliefert. Die Quellen Q1, Q2, Q3, Q4, Q5 sind Kameras und/oder Mikrophone, die optional noch über Präsentationsumschalter/Video Scaler und/oder Medienplayer und/oder Audio-Mischpult mit der Matrix-Schaltung MS verbunden sind. Die Quellen Q1, Q2, Q3, Q4, Q5 können auch mobile Datengeräte wie Laptops, Notebooks oder Notepads sein. Diese Geräte weisen üblicherweise auch integrierte Kameras und Mikrophone auf.

Über das Bedienelement des Control-Panels CP wird der auf den Ausgabeeinrichtungen VE1, VZ1 anzuzeigende Bild- und/oder Toninhalt ausgewählt. Das Control-Panel CP wird üblicherweise von dem Vorsitzenden Richter und/oder einer dafür bestimmten Person bedient. Der Bediener wählt auf dem Control-Panel eine Quelle Q1, Q2, Q3, Q4, oder Q5 unter den an die Matrix-Schaltung MS angeschlossenen Quellen Q1, Q2, Q3, Q4, Q5 aus.

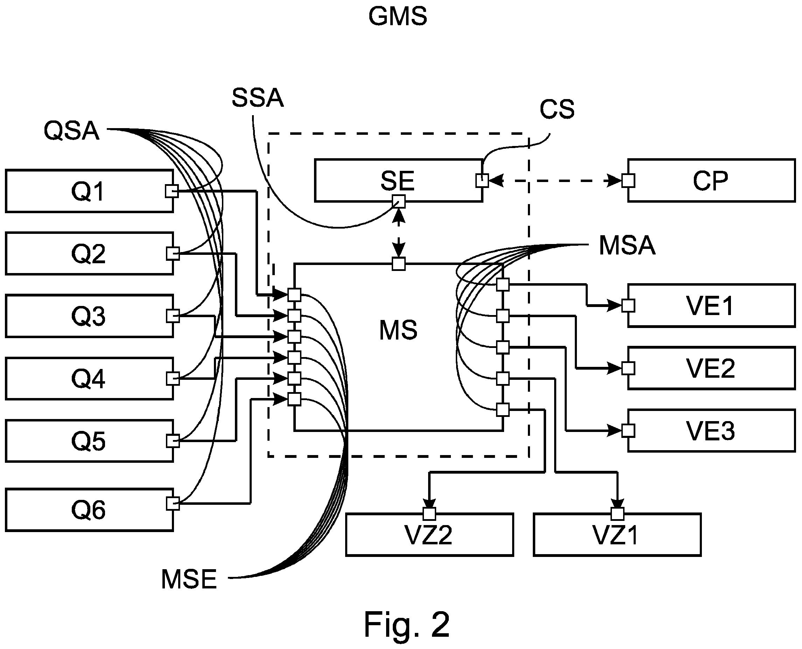

Ein weiteres Ausführungsbeispiel des erfindungsgemäßen Gerichtssaal-Mediensystems GMS zeigt Fig. 2. Das erfindungsgemäße Gerichtssaal-Mediensystem GMS weist ebenfalls die Matrix-Schaltung MS auf. Mit der Matrix-Schaltung MS sind sechs Quellen Q1, Q2, Q3, Q4, Q5, Q6 über jeweils eine Eingabe-Schnittstelle MSE verbunden. Jede Quelle Q1, Q2, Q3, Q4, Q5, QS6 weist dazu eine Ausgabe-Schnittstelle QSA auf. Die Matrix-Schaltung MS weist außerdem fünf Ausgabe-Schnittstellen MSA auf, mit denen jeweils eine Ausgabeeinrichtung VE1, VE2, VE3, VZ1, VZ2 verbunden ist. Eine erste Ausgabeeinrichtung VE1 ist eine Ausgabeeinrichtung, die für den Vorsitzenden Richter zur Verfügung steht. Die beiden weiteren ersten Ausgabeeinrichtungen VE2, VE3 sind dafür eingerichtet, Bild- und/oder Toninhalte den Prozessbeteiligten auszugeben. Die zweiten Ausgabeeinrichtung VZ1, VZ2 sind Ausgabeeinrichtungen, die für die Öffentlichkeit bestimmte Bild- und Toninhalte anzeigen. Jede Ausgabeeinrichtung VE1, VE2, VE3, VZ1, VZ2 weist ebenfalls eine Schnittstelle auf. Über das Bedienelement des Control-Panels CP werden sowohl eine der Quellen Q1, Q2, Q3, Q4, Q5, Q6 zum Empfang der Bild- und/oder Toninhalte als auch die die empfangenen Bild- und/oder Toninhalte ausgebenden Ausgabeeinrichtungen VE1, VE2, VE3, VZ1, VZ2 ausgewählt.

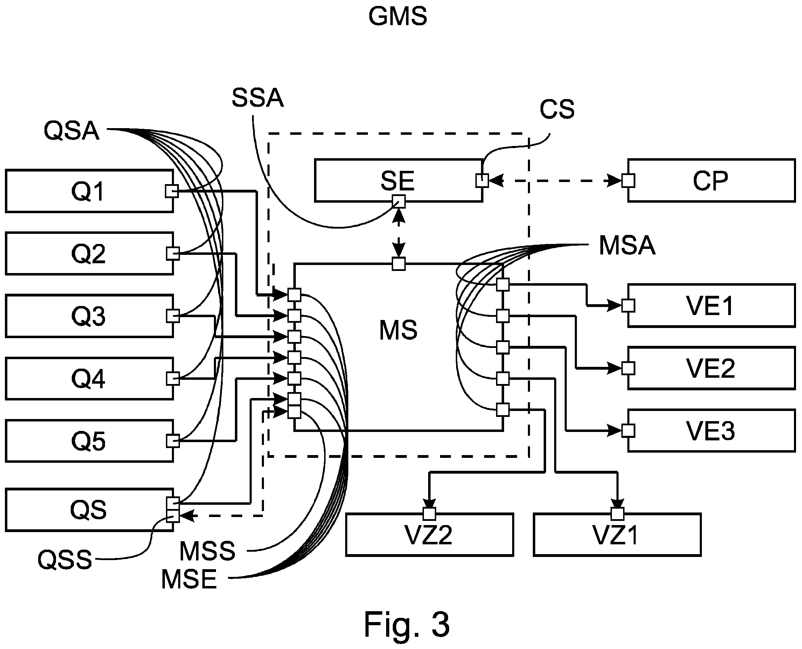

Fig. 3 zeigt eine Variante des vorherstehenden Ausführungsbeispiels (s. Fig. 2) des erfindungsgemäßen Gerichtssaal-Mediensystems GMS, wobei eine der Quellen Q1, Q2, Q3, Q4, Q5, QS eine steuerbare Quelle QS ist. Die steuerbare Quelle QS ist mit der Matrix-Schaltung MS über die Ausgabe-Schnittstelle QSA mit der Eingabe-Schnittstelle MSE verbunden. Zusätzlich ist die Eingabe-Schnittstelle QSS der steuerbaren Quelle QS mit der Ausgabe-Schnittstelle MSS der Matrix-Schaltung MS verbunden.

Über das Bedienelement des Control-Panels CP kann der Bediener des Control-Panels CP die von der steuerbaren Quelle QS empfangenen Bild- und/oder Toninhalte bearbeiten. Insbesondere können die angezeigten Bild- und/oder Toninhalte über die separate Steuereinheit SE z.B. ausgeschnitten und/oder zugeschnitten werden und/oder die Lautstärke geändert werden.

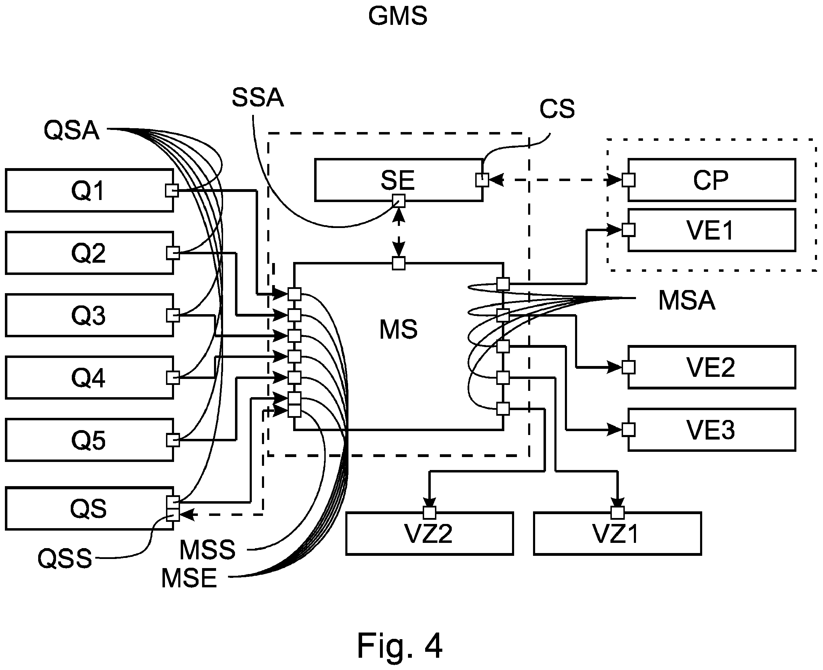

Ein weiteres Ausführungsbeispiel des erfindungsgemäßen Gerichtssaal-Mediensystems GMS zeigt Fig. 4. In dieser Variante des Ausführungsbeispiels aus Fig. 2 ist das Control-Panel CP ebenso wie die Master-Ausgabeeinrichtung VDM im Sichtfeld nur einer Person angeordnet. Diese Person ist vorzugsweise der Vorsitzende Richter. Der Vorsitzende Richter kann so die empfangenen Bild- und/oder Toninhalte, die auf der Master-Ausgabeeinrichtung VDM angezeigt werden, prüfen und mittels Eingabe auf dem Control-Panel CP über die separate Steuerung SE auf weiteren Ausgabeeinrichtungen VE1, VE2, VE3, VZ1, VZ2 ausgeben.

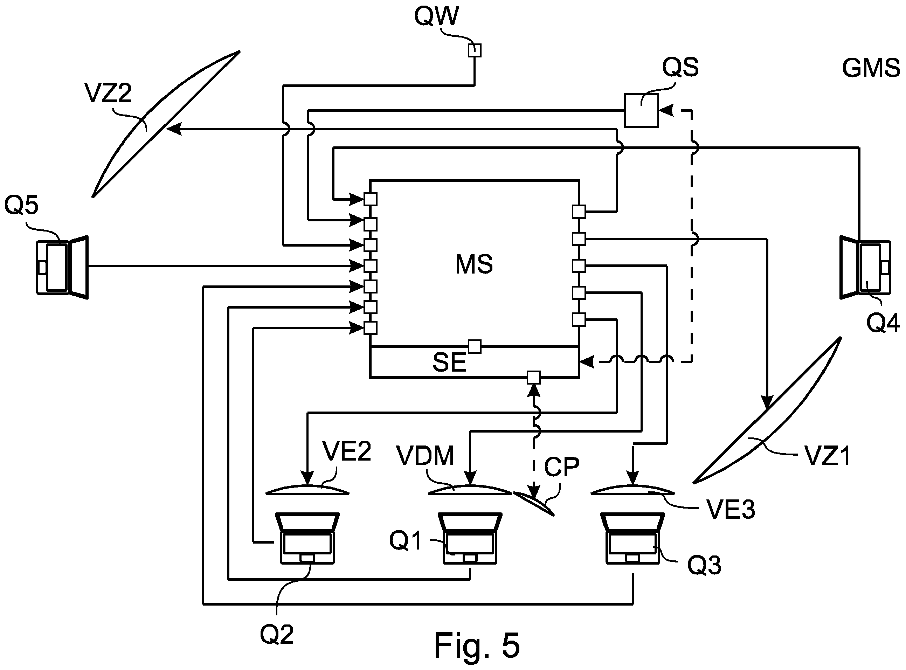

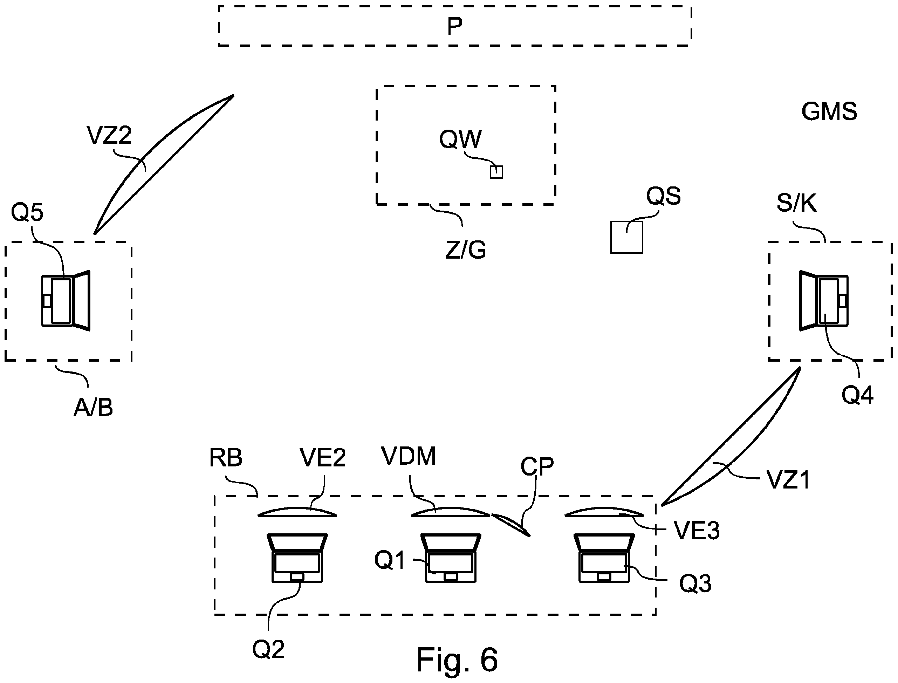

Fig. 5 und Fig. 6 zeigen eine beispielhafte Anordnung eines Ausführungsbeispiels des erfindungsgemäßen Gerichtssaal-Mediensystem GMS in einem Gerichtssaal. Der Gerichtssaal weist einen öffentlich zugänglichen Bereich für Zuschauer P, eine Richterbank RB mit jeweils einem Platz für den Vorsitzenden Richter und zwei Beisitzern, einen Bereich Z/G für Zeugen bzw. Gutachter, sowie jeweils einen Bereich für die Prozessparteien, Klage S/K und Verteidigung A/B, auf.

Das Gerichtssaal-Mediensystem GMS weist als zentrales Element die Matrix-Schaltung MS auf, mit der sämtliche Quellen Q1, Q2, Q3, Q4, Q5, QW, QS über Quell-Schnittstellen QSA verbunden sind. Die Quellen Q1, Q2, Q3, Q4, Q5, QW, QS sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine Quelle QW anschließen kann. Außerdem ist mit der Matrix-Schaltung MS eine Dokumentenkamera QS verbunden, die eine steuerbare Quelle QS darstellt.

Mit der Matrix-Schaltung MS sind weiterhin die Ausgabeeinrichtungen VDM, VE2, VE3, VZ1, VZ2 über Ausgabe-Schnittstellen MSA angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben.

Die zweiten Ausgabeeinrichtungen VZ1, VZ2 sind öffentlich zugängliche Ausgabeeinrichtungen, in diesem Ausführungsbeispiel Großbildschirme oder -leinwände. Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes.

Die Steuerung des Gerichtssaal-Mediensystem GMS erfolgt über ein Control-Panel CP. Der Vorsitzende Richter kann mittels des Control-Panel CP die gesamte Technik des Gerichtssaal-Mediensystem GMS im Sitzungssaal steuern. Hierfür ist das Control-Panel ist im Gerichtssaal selbst angeordnet und wird am Platz des Vorsitzenden angeordnet. Es ist aber auch möglich, diese Steuerung über das Control-Panel CP an eine andere Person zu übertragen, so dass der vorsitzende Richter damit nicht zusätzlich belastet wird. Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Der Bediener des Control-Panels CP wählt mittels des Bedienelements des Control-Panels CP eine der Quellen Q1, Q2, Q3, Q4, Q5, QW, QS zum Empfang der Bild- und/oder Toninhalte. Diese Auswahl wird von dem Control-Panel CP an die separate Steuereinheit SE gesendet. Die empfangenen Bild- und/oder Toninhalte werden dabei nicht auf der Anzeige des Control-Panel CP selbst angezeigt, sondern zunächst auf der Master-Ausgabeeinrichtung VDM, die eine Vorschaufunktion ausübt. Hier kann der Vorsitzende Richter die empfangenen Bild- und/oder Toninhalte prüfen. Zusätzlich kann der Vorsitzende Richter mittels der Master-Ausgabeeinrichtung VDM die ausgewählten und auf der Master-Ausgabeeinrichtung VDM angezeigten Bild- und/oder Toninhalte verändern und bearbeiten, z.B. ausschneiden, zuschneiden oder die Lautstärke ändern. Außerdem kann der Vorsitzende Richter die von der steuerbaren Quelle QS empfangenen Bild- und/oder Toninhalte ebenfalls in gleicher Weise mittels des Control-Panels CP bearbeiten. Im Anschluss wählt der Vorsitzende Richter oder der Bediener des Control-Panels CP mittels des Control-Panels CP eine oder eine Mehrzahl der Ausgabeeinrichtungen VDM, VE2, VE3, VE4, VZ1, VZ2 zur Ausgabe der von der ausgewählten Quelle Q1, Q2, Q3, Q4, Q5, QW, QS empfangenen Bild- und/oder Toninhalte aus. Die empfangenen Bild- und/oder Toninhalte werden dann auf der oder den ausgewählten Ausgabeeinrichtungen VDM, VE2, VE3, VE4, VZ1, VZ2 angezeigt.

Eine weitere Quelle ist eine Videokonferenz, die ebenfalls mittels des Control-Panels CP ausgewählt werden kann. Das erfindungsgemäße Gerichtssaal-Mediensystem GMS ist in der Lage, die Mimik und Gestik des gesamten Spruchkörpers und der anwesenden Prozessbeteiligten dauerhaft und in hochauflösender Qualität zu übertragen. Beiträge von Prozessbeteiligten, die körperlich nicht im Sitzungssaal anwesend sind, werden auf diese Weise über die vorhandenen Ausgabeeinrichtungen VDM, VE2, VE3, VE4, VZ1, VZ2 allen Anwesenden zugänglich gemacht.

### BEZUGSZEICHENLISTE

- GMS: Gerichtssaal-Mediensystem
- VE1, VE2, VE3, VE4,: Erste Ausgabeeinrichtung
VE5
- VDM: Master-Ausgabeeinrichtung
- VZ1, VZ2: Zweite Ausgabeeinrichtung
- MSA: Ausgabe-Schnittstelle der Matrix-Schaltung
- MS: Matrix-Schaltung
- MSE: Eingabe-Schnittstelle der Matrix-Schaltung
- MSS: Steuerungseingangsschnittstelle
- SE: Separate Steuereinheit
- SSA: Steuerungsausgangsschnittstelle
- CS: Control-Schnittstelle
- CPS: Ausgabe-Schnittstelle Control-Panel
- CP: Control-Panel
- Q1, Q2, Q3, Q4, Q5,: Quelle
Q6
- QW: Freie Quelle
- QSA: Quell-Schnittstelle
- RB: Richterbank
- P: Zuschauerbereich
- Z/G: Bereich für Zeugen und Gutachter
- S/K: Bereich für Staatsanwalt/Klage
- A/B: Bereich für Verteidigung

## Patentansprüche

1. Verfahren zur Darstellung von Inhalten auf einer Ausgabeeinrichtung (VDM, VE1, VE2, VE3, VE4, VE5, VZ1, VZ2) eines Gerichtssaales mit den Verfahrensschritten
• Empfangen eines Bild- und/oder Toninhaltes über einen ersten von mehreren Anschlüssen einer Matrix-Schaltung (MS)
• Ausgeben des Bild- und/oder Toninhaltes auf einer ersten Ausgabeeinrichtung (VDM, VE1, VE2, VE3, VE4, VE5)
• Ausgeben von Teilen der auf der ersten Ausgabeeinrichtung ausgegebenen Bild- und/oder Toninhalten auf einer zweiten (VZ1, VZ2) von der ersten Ausgabeeinrichtung (VDM, VE1, VE2, VE3, VE4, VE5) verschiedenen Ausgabeeinrichtung.

2. Verfahren zur Darstellung von Inhalten auf einer Ausgabeeinrichtung (VDM, VE1, VE2, VE3, VE4, VE5, VZ1, VZ2) eines Gerichtssaales nach Anspruch 1,
**dadurch gekennzeichnet, dass**
der erste Anschluss als Quelle (Q1, Q2, Q3, Q4, Q5, Q6, QS, QW) für den Bild- und/oder Toninhalt ausgewählt wird und/oder
die erste Ausgabeeinrichtung (VDM, VE1, VE2, VE3, VE4, VE5) als Ausgabeeinrichtung für die Ausgabe des Bild- und/oder Toninhaltes ausgewählt wird und/oder
die zweite Ausgabeeinrichtung (VZ1, VZ2) als Ausgabeeinrichtung für die Ausgabe des Bild- und/oder Toninhaltes ausgewählt wird.

3. Verfahren zur Darstellung von Inhalten auf einer Ausgabeeinrichtung (VDM, VE1, VE2, VE3, VE4, VE5, VZ1, VZ2) eines Gerichtssaales nach Anspruch 1 oder 2,
**dadurch gekennzeichnet, dass**
das Empfangen des Bild- und/oder Toninhalts über den ersten von mehreren Anschlüssen der Anschluss einer Matrix-Schaltung (MS) und/oder das Ausgeben des Bild- und/oder Toninhaltes auf einer ersten Ausgabeeinrichtung (VDM, VE1, VE2, VE3, VE4, VE5) über die an eine Matrix-Schaltung (MS) angeschlossene erste Ausgabeeinrichtung (VDM, VE1, VE2, VE3, VE4, VE5) und/oder
das Ausgeben von Teilen der auf der ersten Ausgabeeinrichtung (VDM, VE1, VE2, VE3, VE4, VE5) ausgegebenen Bild- und/oder Toninhalten auf einer zweiten (VZ1, VZ2) von der ersten Ausgabeeinrichtung (VDM, VE1, VE2, VE3, VE4, VE5) verschiedenen Ausgabeeinrichtung über die an eine Matrix-Schaltung (MS) angeschlossene zweite Ausgabeeinrichtung (VZ1, VZ2) erfolgt,
wobei die Matrix-Schaltung (MS) über eine separate Steuereinheit (SE) geschaltet wird, und
wobei über die separate Steuereinheit (SE) der Anschluss ausgewählt wird, über den der Bild- und/oder Toninhalt empfangen wird und/oder über die separate Steuereinheit (SE) die erste Ausgabeeinrichtung (VDM, VE1, VE2, VE3, VE4, VE5) ausgewählt wird, über den der Bild- und/oder Toninhalt an die erste Ausgabeeinrichtung (VDM, VE1, VE2, VE3, VE4, VE5) ausgegeben wird und/oder
über die separate Steuereinheit (SE) die zweite Ausgabeeinrichtung (VZ1, VZ2) ausgewählt wird, über die der Bild- und/oder Toninhalt an die zweite Ausgabeeinrichtung (VZ1, VZ2) ausgegeben wird.

4. Verfahren zur Darstellung von Inhalten auf einer Ausgabeeinrichtung (VDM, VE1, VE2, VE3, VE4, VE5, VZ1, VZ2) eines Gerichtssaales nach einem oder mehreren der Ansprüche 2 oder 3,
**dadurch gekennzeichnet, dass**
die Auswahl des Anschlusses für den Empfang des Bild- und/oder Toninhaltes und/oder die Auswahl der ersten Ausgabeeinrichtung (VDM, VE1, VE2, VE3, VE4, VE5) und/oder die Auswahl der zweiten Ausgabeeinrichtung (VZ1, VZ2) über das Control-Panel (CP) erfolgt,
wobei die Auswahl des Anschlusses für den Empfang des Bild- und/oder Toninhaltes und/oder die Auswahl der ersten Ausgabeeinrichtung (VDM, VE1, VE2, VE3, VE4, VE5) und/oder die Auswahl der zweiten Ausgabeeinrichtung (VZ1, VZ2) vom Control-Panel (CP) an die separate Steuereinheit (SE) gesendet wird.

5. Verfahren zur Darstellung von Inhalten auf einer Ausgabeeinrichtung (VDM, VE1, VE2, VE3, VE4, VE5, VZ1, VZ2) eines Gerichtssaales nach Anspruch 4,
**dadurch gekennzeichnet, dass**
das Control-Panel (CP) eine von der ersten Ausgabeeinrichtung (VDM, VE1, VE2, VE3, VE4, VE5) und/oder von der separaten Steuereinheit (SE) separate Einheit ist.

6. Verfahren zur Darstellung von Inhalten auf einer Ausgabeeinrichtung (VDM, VE1, VE2, VE3, VE4, VE5, VZ1, VZ2) eines Gerichtssaales nach einem oder mehreren der Ansprüche 4 oder 5,
**dadurch gekennzeichnet, dass**
die Auswahl des Anschlusses für den Empfang des Bild- und/oder Toninhaltes und/oder die Auswahl der ersten Ausgabeeinrichtung (VDM, VE1, VE2, VE3, VE4, VE5) und/oder die Auswahl der zweiten Ausgabeeinrichtung (VZ1, VZ2) vom Control-Panel an (CP) die separate Steuereinheit (SE) gesendet wird.

7. Verfahren zur Darstellung von Inhalten auf einer Ausgabeeinrichtung (VDM, VE1, VE2, VE3, VE4, VE5, VZ1, VZ2) eines Gerichtssaales nach einem oder mehreren der vorhergehenden Ansprüche,
**dadurch gekennzeichnet, dass**
die auf der ersten Ausgabeeinrichtung (VDM, VE1, VE2, VE3, VE4, VE5) ausgegebenen Bild- und/oder Toninhalte auf der ersten Ausgabeeinrichtung (VDM, VE1, VE2, VE3, VE4, VE5) verändert werden,
wobei die Bild- und/oder Toninhalte durch Zuschneiden der Bild- und/oder Toninhalte verändert werden, oder
das Zuschneiden durch Ausschneiden eines Bildausschnitts und/oder einer Bild- und/oder Tonsequenz der auf der ersten Ausgabeeinrichtung (VDM, VE1, VE2, VE3, VE4, VE5) ausgegebenen Bild- und/oder Toninhalte erfolgt.

8. Verfahren zur Darstellung von Inhalten auf einer Ausgabeeinrichtung (VDM, VE1, VE2, VE3, VE4, VE5, VZ1, VZ2) eines Gerichtssaales nach einem oder mehreren der vorhergehenden Ansprüche,
**dadurch gekennzeichnet, dass**
die erste und7oder zweite Ausgabeeinrichtung (VDM, VE1, VE2, VE3, VE4, VE5, VZ1, VZ2) eine von der Öffentlichkeit nicht einsehbare Ausgabeeinrichtung ist.

9. Verfahren zur Darstellung von Inhalten auf einer Ausgabeeinrichtung (VDM, VE1, VE2, VE3, VE4, VE5, VZ1, VZ2) eines Gerichtssaales nach einem oder mehreren der vorhergehenden Ansprüche,
**dadurch gekennzeichnet, dass**
aus einer Auswahl aus mehreren Ausgabeeinrichtungen (VDM, VE1, VE2, VE3, VE4, VE5, VZ1, VZ2) jeder einzelnen der Ausgabeeinrichtungen (VDM, VE1, VE2, VE3, VE4, VE5, VZ1, VZ2) ein Anschluss einer Quelle (Q1, Q2, Q3, Q4, Q5, Q6, QS, QW) zugewiesen wird, wobei der über den ausgewählten Anschluss empfangene Bild- und/oder Toninhalt zur auf der dem ausgewählten Anschluss zugewiesenen Ausgabeeinrichtung (VDM, VE1, VE2, VE3, VE4, VE5, VZ1, VZ2) ausgegeben wird,
wobei den einzelnen Ausgabeeinrichtungen (VDM, VE1, VE2, VE3, VE4, VE5, VZ1, VZ2) unterschiedliche Anschlüsse zugewiesen werden.

10. Gerichtssaal-Mediensystem (GMS) zum Empfang und zur Ausgabe von Bild- und/oder Toninhalten mit
• einer Matrix-Schaltung (MS) mit einer Mehrzahl von Anschlüssen für Quellen (Q1, Q2, Q3, Q4, Q5, Q6, QS, QW),
• einer separaten Steuereinheit (SE),
• einem Control-Panel (CP) zur Bedienung der separaten Steuereinheit (SE),
• einer Mehrzahl von Ausgabeeinrichtungen (VDM, VE1, VE2, VE3, VE4, VE5, VZ1, VZ2) und
wobei die Mehrzahl von Ausgabeeinrichtungen (VDM, VE1, VE2, VE3, VE4, VE5, VZ1, VZ2) an die Matrix-Schaltung (MS) angeschlossen ist,
wobei die separate Steuereinheit (SE) an die Matrix-Schaltung (MS) angeschlossen ist, und
wobei das Control-Panel (CP) an die separate Steuereinheit (SE) angeschlossen ist.

11. Gerichtssaal-Mediensystem (GMS) zum Empfang und zur Ausgabe von Bild- und/oder Toninhalten nach Anspruch 10,
**dadurch gekennzeichnet, dass**
für den separaten Anschluss von Quellen (Q1, Q2, Q3, Q4, Q5, Q6, QS, QW) eine Mehrzahl von Quell-Schnittstellen (MSE) vorhanden sind, über die Bild- und/oder Toninhalte empfangbar sind.

12. Gerichtssaal-Mediensystem (GMS) zum Empfang und zur Ausgabe von Bild- und/oder Toninhalten nach einem oder mehreren der Ansprüche 10 oder 11,
**dadurch gekennzeichnet, dass**
die separate Steuereinheit (SE) eine Steuerungsausgangsschnittstelle (SSA) und/oder eine Control-Schnittstelle (CS) aufweist,
wobei die separate Steuereinheit (SE) über die Steuerungsausgangsschnittstelle (SSA) und die Steuerungseingangsschnittstelle (MSS) an die Matrix-Schaltung (MS) angeschlossen ist.

13. Gerichtssaal-Mediensystem (GMS) zum Empfang und zur Ausgabe von Bild- und/oder Toninhalten nach einem oder mehreren der Ansprüche 10 bis 12,
**dadurch gekennzeichnet, dass**
das Control-Panel (CP) über die Control-Schnittstelle (CS) an die separate Steuereinheit (SE) angeschlossen ist.

14. Gerichtssaal-Mediensystem (GMS) zum Empfang und zur Ausgabe von Bild- und/oder Toninhalten nach einem oder mehreren der Ansprüche 10 bis 13,
**dadurch gekennzeichnet, dass**
eine Ausgabeeinrichtung eine Master-Ausgabeeinrichtung (VDM) ist,
wobei das Control-Panel (CP) an der Master-Ausgabeeinrichtung (VDM) angeordnet ist.

15. Gerichtssaal-Mediensystem (GMS) zum Empfang und zur Ausgabe von Bild- und/oder Toninhalten nach einem oder mehreren der Ansprüche 10 bis 14,
**dadurch gekennzeichnet, dass**
eine der Quellen (QS) über die separate Steuereinheit (SE) durch das Control-Panel (CP) steuerbar ist.
